# EUROPEAN PATENT APPLICATION

(11) **EP 1 252 825 A1**
(43) Date of publication of application: **30.10.2002**
(21) Application number: 01109996.7
(22) Date of filing: 25.04.2001
(51) Int. Cl.: A23L 1/227, A23L 1/228

(54) **Flavouring compositions**

(71) Applicant: Société des Produits Nestlé S.A., 1800 Vevey (CH)
(72) Inventor: Schlichtherle-Cerny, Hedwig, 1093 La Conversion (CH); Affolter, Michael, 1073 Savigny (CH); Blank, Imre, 1073 Savigny (CH); Cerny, Christophe, 1093 La Conversion (CH); Robert, Fabien, 01220 Divonne Les Bains (FR); Beksan, Ersan, 85375 Neufahrn (DE); Hofmann, Thomas, 85375 Neufahrn (DE); Schieberle, Peter, 85354 Freising (DE)
(74) Representative: Wavre, Claude-Alain

(57) **Abstract**

Flavouring compositions for imparting umami taste to food products comprising Amadori and Heyns rearrangement products and/or N-Glycosides. Such compounds represent an alternative to monosodium glutamate in order to impart umami taste. *N*-(D-glucos-1-yl)-L-glutamic acid and salts thereof. Use of such compounds in food products.

## Description

The present invention relates to the subject of flavour enhancing compositions for flavouring food-stuffs. The present invention particularly relates to compositions with umami taste.

Besides the four basic tastes sweet, acid, salty and bitter, the glutamate-like taste has been widely discussed in the literature and confirmed as the fifth basic taste (Chaudhari et al [2000] Nat. Neurosci. 3: 113). Monosodium glutamate (MSG) and certain nucleotide derivatives are present in various savoury foods. They are also widely used as flavour and taste enhancers in foodstuffs such as snacks and culinary products, for example. These molecules are known to elicit the unique taste called « umami », a savoury and delicious taste sensation. Umami taste substances have the ability to enhance the flavour and the mouthfeel of food products. In particular MSG and 5'-nucleotide derivatives exhibit a strong mutual synergism, thus increasing the umami taste sensation.

Since several years, the flavour and food industry is interested in developing alternative flavour enhancing systems for culinary products. Thus, food manufacturers aim at finding new molecules imparting the umami character as known from MSG in order to reduce its added amount in manufactured products.

In addition to MSG and 5'-nucleotides, some other molecules have been reported as umami-like compounds, such as organic acids like tartaric and succinic acid (Ney [1971] Z. Lebensm. Unters. Forsch. 146: 141; Velisek et al. [1978] Nahrung 22: 735) and di- to octapeptides (Yamasaki and Maekawa [1978] Agric. Biol. Chem. 42: 1761; Noguchi et al. [1975] J. Agric. Food Chem. 23: 49).

For example, WO 9704667 discloses tripeptides containing a hydrophobic amino acid residue and at least one acidic amino acid residue as well as amino acid derivatives with an *N*-lactoyl residue as flavouring ingredients to impart savoury taste and increase the mouthfeel of foodstuffs. It is also disclosed that these peptides and derivatives can mimic organoleptic features of MSG.

The aim of the present invention is concerned with the problem of providing alternative compounds to MSG in order to impart umami taste to food products.

To this end, the present invention relates to a composition comprising at least one compound, or salts thereof, sodium and potassium salts for example, of the general formula : 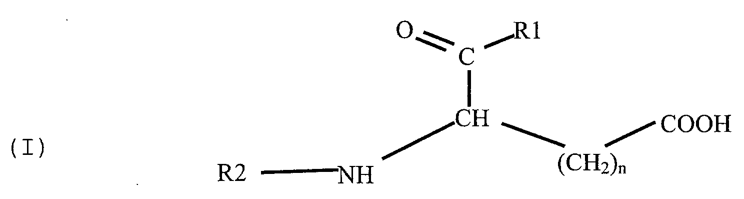 where R1 is OH, an amino acid or a peptide radical attached via a peptidic bond,
n is 1 or 2,
R2 is a 1-deoxy-2-ketose or 2-deoxy-1-aldose radical derived from sugars or derivatives thereof, the compound being-present in an effective amount to induce the umami taste perception.

Such compounds are formed by the reaction of the primary or secondary amino group of an amino acid, peptide or protein with the carbonyl group of a reducing sugar.

In the present specification, the term "sugar" refers to polyhydroxy-aldehyde or polyhydroxy-ketone compounds such as mono-, di-, oligo- and/or polysaccharides.

As "reducing sugar" it has to be understood any sugar whose carbonyl group is available for the reaction with a primary or secondary amino group, that is to say that this carbonyl group is not involved in any glycosidic bond.

Then, the sugar may be selected from the group comprising glyceraldehyde, erythrose, threose, ribose, arabinose, xylose, lyxose, allose, altrose, glucose, mannose, gulose, idose, galactose, talose, tetrulose, ribulose, xylulose, psicose, fructose, sorbose and tagatose.

The sugar may also be selected from the group comprising cellobiose, gentiobiose, isomaltose, lactose, lactulose, maltose, maltulose, melibiose, neohesperidose, nigerose, palatinose, rutinose, fucosidolactose, maltotriose, manninotriose, panose, maltotetraose and stachyose.

The present invention also concerns compositions in which R2 is a sugar derivative. Thus, in this context, the term "derivative" refers to compounds which come from modification, polymerisation, addition of a residue to the sugar molecule assuming that this derivative still contains a reducing carbonyl group. Such derivatives may be selected from the group comprising reducing di- and oligosaccharides and uronic acids, for example.

Thus, the sugar derivative may also be selected from the group comprising galacturonic acid, mannuronic acid, glucuronic acid, and hydrolysed pectins, for example.

The present invention also deals with compositions comprising derivatives of the compounds (I) in which the carbonyl group of the 1-deoxy-2-ketose or 2-deoxy-1-aldose radical radical has been selectively reduced to a hydroxyl group. These compounds belong to the general class of sugar alcohol derivatives. Alcohol groups may be primary or secondary alcohol groups.

Furthermore, the present invention refers to compositions comprising derivatives of compounds (I) in which the carbonyl group of the 2-deoxy-1-aldose radical has been selectively oxidised. These compounds belong to the general class of glyconic acid derivatives.

The present invention also refers to compositions comprising at least one compound, or salts thereof, sodium and potassium salts for example, of the general formula : 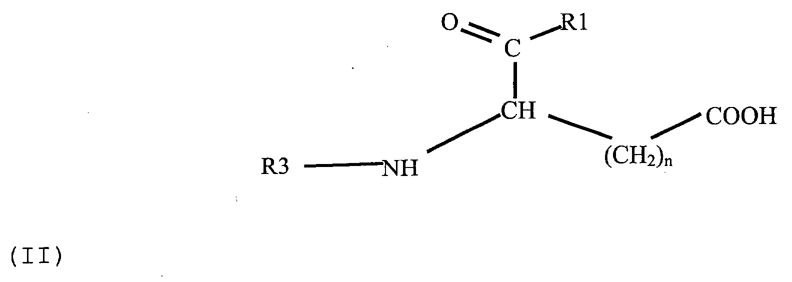 where R1 is OH, an amino acid or a peptide radical attached by a peptidic bond,
n is 1 or 2,
R3 is a glycosidic residue derived from sugars or derivatives thereof, the compound being present in an effective amount to induce the umami taste perception.

As "glycosidic residue derived from sugar" it should be understood that the sugar is bound to the nitrogen atom through the anomeric carbon atom that originally held the carbonyl group in the sugar. Preferably, the bond is established between the nitrogen atom and the C1 or C2 atom of the sugar residue. The compounds (II) are assumed to belong to the general family of N-glycoside compounds.

The terms "sugar" and "derivatives" correspond to the same definition as set out above concerning compound I.

Compounds (I) and (II) of the compositions according to the invention are traditionally known as Maillard reaction products. The Maillard reaction occurs generally between reducing sugars and amino groups of aminoacids, peptides or proteins, for example. The interaction of amino compounds with sugars initially involves the nucleophilic attack of a primary or secondary amino group of an amino acid, peptide or protein, for example, to the carbonyl group of a reducing sugar, leading to an *N*-glycoside : 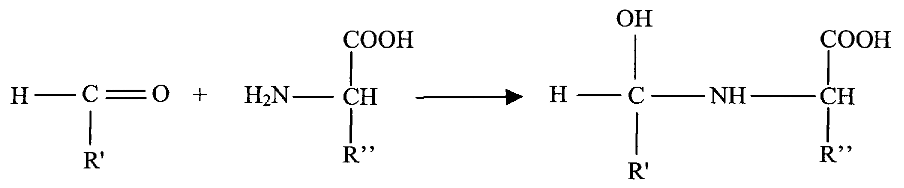 R' represents the remaining polyhydroxy part of a reducing sugar (aldose or ketose) and R'' represents the side chain of an amino acid.

If an aldose is implicated in the reaction, the obtained *N*-glycoside (aldosylamine) will rearrange to an amino-deoxyketose through Amadori rearrangement. If a ketose is implicated in the reaction, the obtained glycoside (ketosylamine) will rearrange to an amino-deoxyaldose via a Heyns rearrangement. These kinds of final products are called Amadori and Heyns compounds and correspond to the compound (I) of the umami taste flavouring composition according to the present invention.

Obviously, due to its cyclisation properties and equilibrium the sugar radical in the compounds of the general formula (I) and (II) can occur in the open-chain form or in one or more cyclic forms.

Another aspect of the present invention deals with the use of the compositions according to the invention in food products in an effective amount in order to induce an umami taste perception upon consumption.

The food products that are concerned by the use of the composition according to the present invention may be dehydrated products such as bouillons, soups, snacks, cereal products, process flavours, culinary products such as cooking aids or powdered flavourings for example, but also intermediate moisture foods such as spreadable paste, sausage, for example and petfoods as well. However, the composition according to the present invention may also be used in full moisture food like chilled prepared meals, frozen meals, such as pizzas for example.

In a third aspect, the present invention deals with a method for inducing an umami taste perception to consumers of a food product by adding an effective amount of the compositions according to the present invention to the food product.

Surprisingly, it has been found that the compounds of the compositions which are object of the present invention are very useful flavouring ingredients capable of eliciting an umami taste when they are consumed. Alternatively, such compounds can confer umami taste to foodstuffs supplemented with the compositions of the invention.

Hence, the compositions according to the present invention allow to improve and increase the mouthfeel of the food to which they are added. Thus, it has been found that the compositions according to the present invention are able to mimic the taste sensory properties of monosodium glutamate, the typical umami taste ingredient widely used as a flavour enhancing compound. Thus, the composition according to the present invention can contribute to give or to reinforce the umami taste feature in the food products in which they are incorporated. Such compositions can then replace, at least partially, or can be combined with, monosodium glutamate in foodstuffs in which flavour enhancers are desired. The compositions according to the invention can be used to complement or to replace, at least partially, MSG in order to confer umami taste to food products.

Such results are particularly unexpected and surprising. Indeed Maillard reaction products such as *N*-glycosides (compounds II), Amadori and Heyns rearrangement products (compounds I) and the derivatives thereof have never been described as being able to confer any taste close to monosodium glutamate. These compounds are known and have been described as aroma precursors for the flavour of boiled, roasted or grilled food products, bread aroma, for example, but never as having an umami taste or being a flavour enhancer. Maillard reaction products including Amadori or Heyns products are typically formed upon heat treatment of foodstuffs and are hence responsible for their specific aroma. Typical food products whose flavour are mainly due to Maillard reaction are roasted coffee, cocoa, biscuits, bread and cooked meat, for example.

In a preferred embodiment, the flavouring compositions according to the invention comprise compounds (I) and/or (II) in which R1=OH, n= 1 or 2, which correspond to glutamic acid (n=2) or aspartic acid (n=1) residues.

In another preferred form, the flavouring compositions according to the invention comprise compounds (I) and/or (II) in which R2 and R3 are sugar residues, the sugar being selected from the group comprising fructose, glucose, maltose, lactose, galactose, rhamnose, xylose and mannose.

The compositions according to the present invention may be obtained by chemical synthesis as described below.

### PREPARATION OF AMADORI COMPOUNDS THROUGH THE MAILLARD REACTION

Equimolar amounts of glucose or maltose, for example and either aspartic acid, glutamic acid or salts thereof, for example, may be mixed with water to obtain about 20 to 40 % dry matter. The pH may be adjusted to values between 4 and 6. The reaction mixture is heated to about 60 to 150°C for about 5 min to 2 hours. After cooling to ambient temperature, the reaction mixture may be concentrated and/or dried under vacuum.

### N-GLYCOSIDE COMPOUNDS (COMPOUNDS II) SYNTHESIS

A simple synthetic pathway to *N*-Glycosides comprises mainly two steps. The amino acid or the peptide is dissolved in a polar solvent such as methanol in presence of a base, such as KOH for example. The coupling with a reducing sugar is achieved under reflux conditions.

Hence, the amino acid or peptide or protein may be dissolved in methanol under basic conditions by stirring for example. The reducing sugar (mono-, di- or oligosaccharide) may then be added to the mixture either directly or previously dissolved in methanol. The mixture is then heated until it becomes yellowish. The reaction mixture may then be cooled and concentrated, by means of evaporation under vacuum, for example. The surplus of amino acid may then be removed by filtration and the filtrate containing the product cooled to about -10 to -20 °C. The *N*-glycoside is obtained by adding acetone dropwise to the filtrate. Concentration, cooling, and addition of acetone may be repeated. The fractions may be combined and purified by recrystallization from methanol/acetone according to the procedure described above. Finally, the product may be dried to furnish a powder of *N*-glycoside compound up to about 40 % yield.

### AMADORI COMPOUNDS SYNTHESIS

A synthetic route for Amadori compounds starts with a reducing sugar, such as β-D-fructose, which is submitted to a protection step using acetone in acidic medium. The remaining hydroxyl group is then activated by a triflate group. The leaving group is then substituted by an amino acid dimethylester such as glutamic acid dimethyl ester, for example. Deprotection of the ester group followed by deprotection of the acetal groups under acidic conditions leads to the final Amadori product (compound I).

### AMADORI COMPOUNDS (COMPOUNDS I) SYNTHESIS VIA N-GLYCOSIDES.

Acidic conditions allow dehydration and enolisation of *N*-glycosides to obtain the corresponding Amadori compounds.
*N*-Glycosides obtained as previously described may then be refluxed in methanol and acetic acid. After cooling, acetone may be added and the precipitate obtained may be recovered by means of filtration for example and dried to yield a pale yellow powder.

### LIQUID CHROMATOGRAPHY - MASS SPECTROSCOPY

LC-MS analysis was performed using a SpectraSystem HPLC (Thermo Separation Products Inc.) coupled to a Finnigan LCQ ion trap mass spectrometer equipped with an ESI source in the positive ionisation mode under standard conditions. The compounds synthesized were chromatographed on a TSKgel Amide 80 column (TosoH Biosep) with a mobile phase of 6.5 mmol/L ammonium acetate, pH 5.5, 90 % acetonitrile in water (solvent A) and 7.2 mmol/L ammonium acetate, pH 5.5, 60 % acetonitrile in water (solvent B) using a linear gradient from 10-100 % B in 90 min. The flow was 1.0 mL/min and the UV absorbance was monitored at 214 nm.

### NUCLEAR MAGNETIC RESONANCE

The NMR spectra were acquired on a Bruker AM-360 spectrometer, equipped with a quadrinuclear 5 mm probe head, at 360.13 MHz for 1H and at 75.56 MHz for 13C.

### SENSORY ANALYSIS

Taste testing was performed with 10 panellists. The panellists were asked to describe the taste of the samples using their own descriptors. The compounds to be tested were dissolved at a concentration of 10 mmol/L in a mixture of Vittel® (low mineralisation: 405 mg/L) and deionized filtered water (Millipore) at a ratio of 1:3. The pH of the solution was adjusted to 6.0.

Taste testing with compositions according to the present invention was performed also in a culinary application using a bouillon base without flavour enhancer, such as MSG (monosodium glutamate), IMP (5'-inosine monophosphate), GMP (5'-guanosine monophosphate). Compositions according to the present invention were added to a solution of the bouillon base in water at a concentration of 10 mmol/L. The bouillon compositions according to the present invention were compared to a solution of the bouillon base alone and to a solution of the bouillon base with added MSG (10 mmol/L, pH 5.8). The panellists were asked to describe the taste of the samples using their own descriptors and to compare the taste intensities of the three solutions.

### EXAMPLE I

### SYNTHESIS OF DIPOTASSIUM N-(D-GLUCOS-1-YL)-L-GLUTAMATE

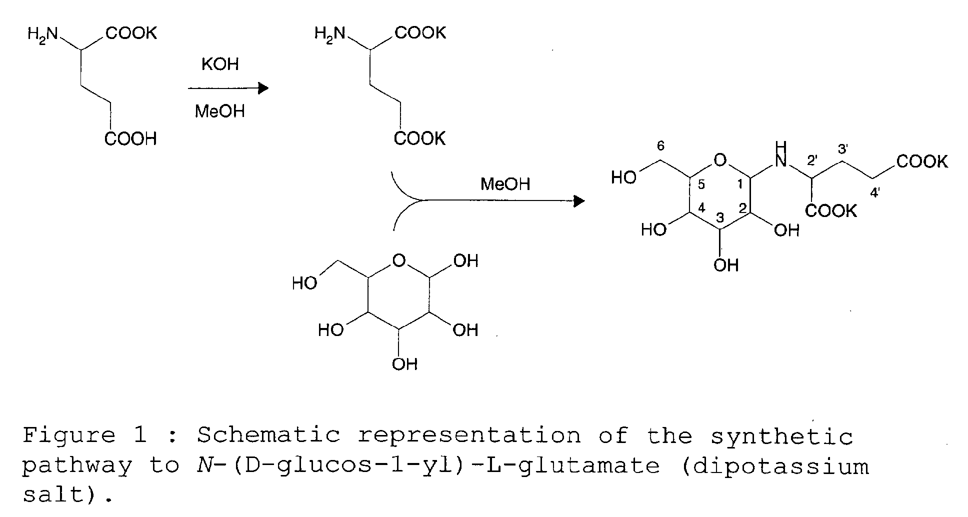

A solution of potassium hydroxide (167 mmol) in absolute methanol (100 mL) was added to monopotassium glutamate (167 mmol) and the mixture was stirred until the amino acid was completely dissolved. Then methanol (300 mL) and anhydrous D-glucose (100 mmol) were added and the suspension was stirred and heated under reflux for 1 h at 75 °C until the solution turned yellowish. The reaction mixture was cooled to ambient temperature and the volume was reduced to 100 mL under vacuum. The surplus of amino acid was removed by filtration and the filtrate containing the product was cooled to -20 °C. The *N*-glucoside was obtained by adding acetone dropwise to the filtrate. Concentration, cooling, and addition of acetone was repeated and yielded additional product. The two fractions were combined and purified by a 2-fold recrystallisation from methanol/acetone according to the procedure described above. Finally, the product was dried to furnish 12.7 g of a white powder of dipotassium *N*-(D-glucos-1-yl)-L-glutamate in 33 % yield. Analytical characterisation is given in **Table 1**.

**Table 1.**

| NMR and MS spectral data of dipotassium *N*-(D-glucos-1-yl)-L-glutamate | | |
|---|---|---|
| ¹H-NMR spectral data δ / ppm (CDCl₃) | ¹³C-NMR spectral data δ / ppm (CDCl₃) | MS (-) ESI *m*/*z (%)* |
| 1.82 (m, CH₂, C_{3'}); 2.22 (m, CH₂, C_{4'}); 3.20 (dd, ³J = 8.8 Hz, ³J = 8.8 Hz, CH, C₂); 3.33-3.37 (m, 2 CH, C₄ and C₅); 3.41 (m, CH, C_{2'}); 3.45 (m, CH, C₃); 3.67 (dd, ²J = 12.3 Hz, ³J = 5.4 Hz, CH, C₆); 3.85 (dd, ²J = 12.3 Hz, ³J = 0.8 Hz, CH, C₆) ; 3.89 (d, ³J = 8.8 Hz, CH, C₁). | 33.1 (C_{3'}); 37.1(C_{4'}); 63.0 (C_{2'}); 63.9 (C₆); 72.7 (C₅); 75.8 (C₂); 79.5 (C₃); 79.7 (C₄); 91.7 (C₁); 185.0 (CO₂); 185.6 (CO₂). | 326 (5), 308 (5), 179 (11), 146 (100), 121 (12), 97 (58), 89 (62), 75 (61), 61 (53), 59 (44) |
| Numbering refers to Figure 1 | | |

### EXAMPLE II

### SYNTHESIS OF N-(1-DEOXY-D-FRUCTOS-1-YL)-L-GLUTAMIC ACID

### Via N-(D-glucos-1-yl)-L-glutamate

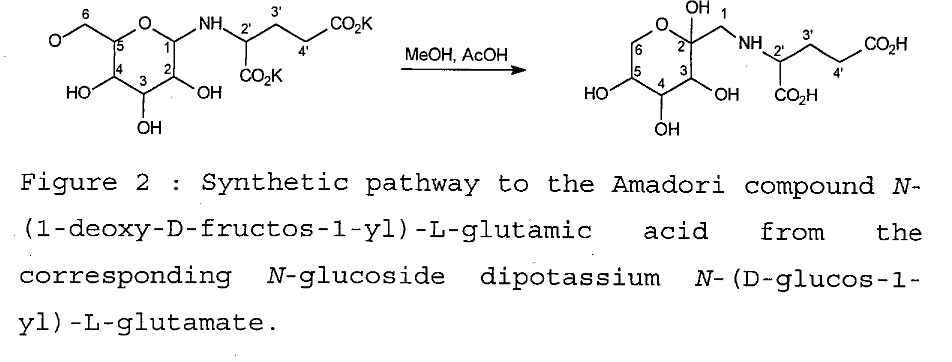

Dipotassium *N*-(D-glucos-1-yl)-L-glutamate (7.9 mmol) was refluxed for 30 min in a mixture composed of methanol (30 mL) and acetic acid (1 mL). The solution was cooled to 0 °C and acetone (20 mL) was added. The precipitate was filtered under reduced pressure and dried under high vacuum to yield a pale yellow powder. It was further purified by dissolving it in water and lyophilizing overnight to obtain 1.23 g of a pale brown powder (52 % yield). Analytical characterisation is given in Table 2.

### Via D-fructose

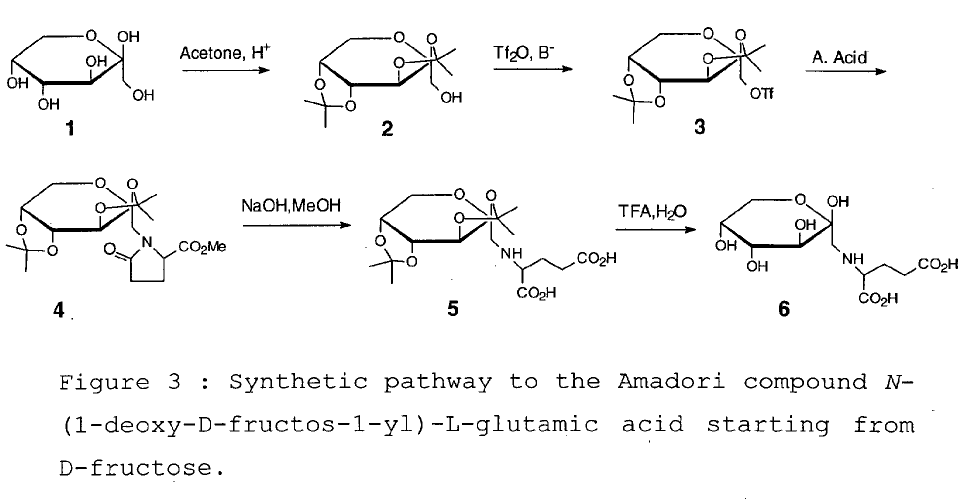

β-D-Fructose (**1**) was successively protected in the positions C-2/3 and C-4/5 with acetone. This intermediate, 2,3:4,5-di-*O*-isopropylidene-β-D-fructopyranose (**2**), was then activated at the C-1 position by a triflate group to yield 2,3:4,5-di-*O*-isopropylidene-1-O-(trifluoromethansulfonyl)-β-D-fructopyranose (**3**). The leaving group was substituted by glutamic acid dimethylester. The substitution reaction resulted in methyl N-(2,3:4,5-di-*O*-Isopropylidene-1-deoxy-D-fructos-1-yl)-pyrrolidone carboxylate (**4**) by intramolecular cyclisation of the glutamate moiety. Basic treatment of the latter gave rise to the acetal-protected glutamate derivative sodium *N*-(2,3:4,5-di-O-isopropylidene-1-deoxy-D-fructos-1-yl)-L-glutamate (**5**) by saponification of the ester and opening of the lactame ring. Deprotection of the acetal groups under mild acidic conditions yielded the target product *N*-(1-deoxy-D-fructos-1-yl)-L-glutamic acid (**6**). Analytical characterisation is given in Table 2.

**Table 2.**

| NMR and MS spectral data of *N*-(1-deoxy-D-fructos-1-yl)-L-glutamic acid | | |
|---|---|---|
| ¹H-NMR spectral data δ / ppm (CDCl₃) | ¹³C-NMR spectral data δ / ppm (CDCl₃) | MS (+) ESI *m*/*z* (%) |
| 2.04-2.10 (m, 1H, CH₂, C_{3'}); 2.39-2.55 (m, 3H, CH₂, C_{3'}); 3.13 (d, ²J = 14.5 Hz, 1H, CH₂, C₁) ; 3.42-3.98 (m, 6H). | 28.51(1 CH₂) ; 37.0 (CH₂) ; 55.5 (1 CH₂ , C₁) ; 66.2 (1 CH); 66.7 (1 CH₂, C₆); 71.8, 72.2, 72.7 (3 CH, C₃, C₄, C₅) ; 98.3 (1 C_{q}, C₂) ; 176.3 (1C_{q}, CO₂) ; 183.9 (1C_{q}, CO₂). | 310 (100), 292 (92), 274 (24), 226 (10), 148 (4). |
| Numbering refers to Figure 2 | | |

### EXAMPLE III

SENSORY ANALYSIS OF Dipotassium *N*-(D-glucos-1-yl)-L-glutamate

The sensory characteristics of a solution of the condensation products between glutamate and D-glucose, as well as a solution of MSG were assessed by 10 panellists. Dipotassium *N*-(D-glucos-1-yl)-L-glutamate unanimously revealed a bouillon-like and long-lasting taste sensation comparable to MSG. It also showed a similar distinct mouthfeel effect as MSG. The bouillon-like taste of the solution of Dipotassium *N*-(D-glucos-1-yl)-L-glutamate + salt was more pronounced than the taste sensation produced by MSG + salt (Results in Table 3).

**Table 3.**

| Sensory evaluation of MSG and dipotassium *N*-(D-glucos-1-yl)-L-glutamate (DPGG) | | |
|---|---|---|
| Sample^{a} | Attributes assigned by the panellists | Intens ity^{b} |
| MSG^{c} | Umami, sweet, mouthfeel, lingering sensation | 1-2 |
| MSG^{c} + NaCl^{c} | Salty, umami, bouillon-like, mouthfeel, long-lasting taste sensation | 3 |
| DPGG^{c} | Bouillon-like, sweet, mouthfeel | 2 |
| DPGG^{c} + NaCl^{c} | Salty, umami, bouillon-like, glutamate-like, long-lasting taste sensation | 3 |
| DPGG^{c} + MSG^{c} | Umami, bouillon-like, sweet, mouthfeel, viscous and lingering taste sensation | 3 |

| | | |
|---|---|---|
| ^{a} All samples were tested at pH 6.0 by 10 panellists in coded beakers presented in alternating order. | | |
| ^{b} Scale 0-3 (0 = not perceived, 3 = perceived as intense) | | |
| ^{c} Tested at a concentration of 10 mmol/L water | | |

### EXAMPLE IV

### SENSORY ANALYSIS OF N-(1-deoxy-D-fructos-1-yl)-L-glutamate

The sensory evaluation of *N*-(1-deoxy-D-fructos-1-yl)-L-glutamate in water and in a bouillon base application was performed with 10 panellists. *N*-(1-deoxy-D-fructos-1-yl)-L-glutamate was compared to an aqueous solution of MSG (10 mmol/L) and to a solution of a bouillon base with added MSG (10 mmol/L).

*N*-(1-deoxy-D-fructos-1-yl)-L-glutamate revealed a pronounced umami note. Its bouillon-like taste was slightly weaker compared to a 10 mmol/L aqueous solution of MSG. Surprisingly, *N*-(1-deoxy-D-fructos-1-yl)-L-glutamate did not elicit the sweetish taste of MSG, but was described by some of the panellists as imparting a fresh taste sensation (Table 4). In a bouillon base application *N*-(1-deoxy-D-fructos-1-yl)-L-glutamate (10 mmol/L) was compared to a bouillon with 10 mmol/L MSG, respectively. Again, *N*-(1-deoxy-D-fructos-1-yl)-L-glutamate showed an umami taste close to the one of MSG and, in addition, a fresh note.

**Table 4.**

| Sensory evaluation of MSG and *N*-(1-deoxy-D-fructos-1-yl)-L-glutamate (Fru-Glu) | | | | |
|---|---|---|---|---|
| Sample^{a} | MSG | Fru-Glu mmol/L | Attributes assigned by the panellists | Intens ity^{b} |
| 1 | 10 | - | Umami, bouillon-like, salty, slightly sweet | 2 |
| 2 | - | 10 | Umami, bouillon-like, slightly salty, fresh | 1-2 |

| | | | | |
|---|---|---|---|---|
| ^{a} The samples were tested at pH 6.0 in water by 10 panellists. | | | | |
| ^{b} Scale 0-3 (0 = not perceived, 3 = perceived as intense) | | | | |

## Claims

1. Composition comprising at least one compound, or salts thereof, of the general formula : 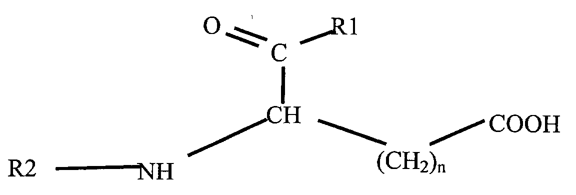 where R1 is OH, an amino acid or a peptide radical attached by a peptidic bond,
n is 1 or 2,
R2 is a 1-deoxy-2-ketose or 2-deoxy-1-aldose radical derived from sugars or derivatives thereof, the compound being present in an effective amount to induce the umami taste perception.

2. Composition comprising at least one compound, or salts thereof, of the general formula: 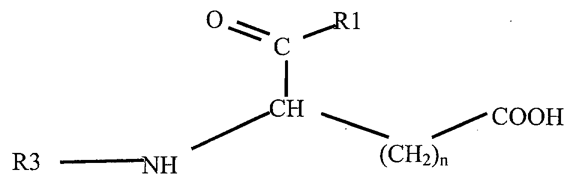 where R1 is OH, an amino acid or a peptide radical attached by a peptidic bond,
n is 1 or 2,
R3 is a glycosidic residue derived from sugars or derivatives thereof, the compound being present in an effective amount to induce the umami taste perception.

3. Composition according to claims 1 and 2 wherein the sugar is selected from the group comprising glyceraldehyde, erythrose, threose, ribose, arabinose, xylose, lyxose, allose, altrose, glucose, mannose, gulose, idose, galactose, talose, tetrulose, ribulose, xylulose, psicose, fructose, sorbose and tagatose.

4. Composition according to claim 1 and 2 wherein the sugar is selected from the group comprising cellobiose, gentiobiose, isomaltose, lactose, lactulose, maltose, maltulose, melibiose, neohesperidose, nigerose, palatinose and rutinose.

5. Composition according to claim 1 and 2 wherein the sugar is selected from the group comprising fucosidolactose, maltotriose, manninotriose and panose.

6. Composition according to claim 1 and 2 wherein the sugar is selected from the group comprising maltotetraose, and stachyose.

7. Composition according to claim 1 and 2 wherein the sugar is selected from the group comprising galacturonic acid, mannuronic acid, glucuronic acid, and hydrolysed pectins.

8. Composition according to claim 1 wherein the compound is *N*-(1-deoxy-D-fructos-1-yl)-L-glutamic acid or salts thereof.

9. Composition according to claim 1 wherein the carbonyl group of the 1-deoxy-2-ketose or 2-deoxy-1-aldose radical derived from sugars or derivatives thereof has been selectively reduced to a hydroxyl radical group.

10. Composition according to claim 1 wherein the carbonyl group of the 2-deoxy-1-aldose radical derived from sugars or derivatives thereof has been selectively oxidised to a carboxyl group.

11. Composition according to claim 2 wherein the compound is *N*-(D-glucos-1-yl)-L-glutamic acid and salts thereof.

12. Use of at least one of the compositions according to any preceding claim in food products in order to induce an umami taste perception upon consumption.

13. Use of at least one of the compositions according to claims 1 to 11 in order to complement or to replace monosodium glutamate in order to confer umami taste to food products.

14. Method for inducing the umami taste perception to consumers of a food product by adding an effective amount of the compositions according to claims 1 to 11 to the food product.
